(19) Europäisches Patentamt
European Patent Office
Office européen des brevets

(11) **EP 1 449 745 B1**

(12) **FASCICULE DE BREVET EUROPEEN**

(45) Date de publication et mention
de la délivrance du brevet:
**13.04.2011 Bulletin 2011/15**

(51) Int Cl.:
***B62D 13/00*** *(2006.01)*

(21) Numéro de dépôt: **04370004.6**

(22) Date de dépôt: **20.02.2004**

(54) **Procédé et dispositif de guidage d'une remorque, véhicule équipé d'un tel dispositif**

Lenkverfahren und Lenkvorrichtung für Anhänger und damit ausgerüstetes Fahrzeug

Method and device for steering a trailer and vehicle with such a device

(84) Etats contractants désignés:
**AT BE BG CH CY CZ DE DK EE ES FI FR GB GR HU IE IT LI LU MC NL PT RO SE SI SK TR**

(30) Priorité: **20.02.2003 FR 0302104**

(43) Date de publication de la demande:
**25.08.2004 Bulletin 2004/35**

(73) Titulaire: **Optima Concept S.a.r.l**
**62620 Ruitz (FR)**

(72) Inventeurs:
• **Norodine, Michel**
**62940 Haillicourt (FR)**

• **Houssard, Olivier**
**62232 Fouquieres les Bethune (FR)**

(74) Mandataire: **Duthoit, Michel Georges André**
**Bureau Duthoit Legros Associés**
**96/98, Boulevard Carnot**
**B.P. 105**
**59027 Lille Cedex (FR)**

(56) Documents cités:
**US-A- 5 329 451      US-A- 5 366 059**
**US-A1- 2001 054 524**

EP 1 449 745 B1

**Description**

La présente invention concerne un procédé et un dispositif pour le guidage d'une remorque directrice sur la trajectoire suivie par un véhicule tracteur.

Bien que plus particulièrement mis au point pour le cas où l'on a affaire à un véritable attelage, comprenant un véhicule tracteur disposant lui-même d'un essieu directeur et d'une remorque, l'invention concerne également le cas d'un véhicule dont les essieux avant et arrière sont directeurs.

L'invention concerne également un véhicule muni d'un tel dispositif de guidage.

L'invention a été particulièrement développée dans le cadre des engins à usage agricole. En effet, lors du passage dans un champ d'un tracteur auquel est attelée une remorque, plusieurs problèmes peuvent se poser.

Tout d'abord, le passage répété des roues sur les plantes finit par les écraser et les détruire, ce qui entraîne une perte de rendement. Il est donc primordial que la trace du passage des roues de l'attelage soit la plus petite possible et notamment, que les roues de la remorque passent au même endroit que les roues du tracteur.

Un autre désagrément que l'on rencontre provient du fait que dans les virages, l'engin remorqué à tendance à couper la trajectoire suivie initialement par le véhicule tracteur, ce qui augmente la surface d'écrasement. De plus, si l'engin remorqué est un pulvérisateur, certaines zones du champ risquent de recevoir une plus forte dose du produit pulvérisé tandis que d'autre seront sous-traitées, du fait du délai nécessaire au rétablissement manuel de la trajectoire.

Cela entraîne donc des sur ou sous-dosages de produit, ce qui peut être particulièrement préjudiciable. En effet, le traitement perd de son efficacité, ce qui entraîne une augmentation des coûts du traitement et un risque de diminution du rendement.

Par exemple, si le produit pulvérisé est un fongicide, les zones sous-traitées risquent de voir se développer la maladie contre laquelle un traitement avait été prévu et par suite de constituer un foyer susceptible de contaminer d'autres plantes, une fois que l'intensité du traitement s'est atténuée.

Le problème de sur ou sous-dosage existe pour d'autres types de remorques. Il s'agira par exemple d'un épandeur à fumier ou à lisier ou de tout autre engin dont la fonction est de répandre un produit sur un champ.

Il existe plusieurs dispositifs qui se proposent de résoudre le problème du suivi de la trajectoire d'un essieu tracteur par un essieu directeur remorqué. Cependant, l'ensemble de ces dispositifs fonctionne selon le principe d'un simple report de l'angle de braquage des roues avant du véhicule tracteur aux roues directrices de la remorque. Certains dispositifs envisagent également un report différé de l'angle de braquage.

On connaît ainsi le document US 2001/054524, le document US 5.329.451 ou encore le document US 5.366.059 qui repose au moins partiellement sur ce principe. Le document US 2001/054524 combine ce mode de contrôle avec deux autres modes de contrôle. La correction finale appliquée à l'essieu directionnel de la remorque est approximative.

Cependant, ces dispositifs présentent plusieurs inconvénients, le premier étant qu'ils ne permettent pas effectivement de faire suivre trace dans trace la trajectoire du véhicule tracteur par la remorque. Dans tous les cas, même si l'on constate une amélioration de la trajectoire de la remorque, celle-ci continue à couper la trajectoire du véhicule tracteur.

De plus, de tels dispositifs à report d'angle direct ou indirect ne prennent pas suffisamment en compte les changements de direction du véhicule tracteur.

Enfin, en ce qui concerne les dispositifs à report d'angle différé, le signal aboutissant au report de l'angle est généré soit à intervalles de temps constant dans l'hypothèse d'une vitesse d'avancement du véhicule tracteur constante, soit en tenant compte de la vitesse d'avancement et de la longueur du châssis. Ainsi, de tels systèmes manquent de précision, notamment lorsque le véhicule tracteur change de vitesse ou même s'arrête, car ils sont basés sur une mesure indirecte de la distance parcourue.

Le but de la présente invention est de proposer un procédé et un dispositif de guidage d'une remorque, ainsi qu'un véhicule équipé d'un tel dispositif, qui pallient les inconvénients précités.

Un but de la présente invention est de proposer un procédé de guidage d'une remorque telle que celle-ci suive trace dans trace la trajectoire du véhicule tracteur, ainsi qu'un dispositif apte à mettre en oeuvre un tel procédé de guidage.

Un autre but de la présente invention est de proposer un procédé et un dispositif de guidage suffisamment souples pour être adaptés à divers types d'attelages, en particulier agricoles, domaine dans lequel il est fréquent d'utiliser successivement différents engins remorqués mais un même véhicule tracteur. -

Un autre but de la présente invention est de proposer un procédé de guidage qui permette de diminuer les pertes tant au niveau du rendement qu'au niveau de l'efficacité des traitements appliqués aux cultures.

Un autre but de la présente invention est de fournir un procédé et un dispositif de guidage d'une remorque qui tiennent compte des modifications de la direction suivie par le véhicule tracteur à l'intérieur d'un virage.

Encore un but de l'invention est de proposer un procédé et un dispositif de guidage indépendants de la vitesse de l'attelage.

D'autres buts et avantages de l'invention apparaîtront au cours de la description qui va suivre, qui n'est donnée qu'à titre indicatif et qui n'a pas pour but de la limiter.

L'invention concerne un procédé de guidage d'une remorque (RQ) équipée d'au moins un essieu remorqué (R) directeur, le long de la trajectoire (C) décrite par un véhicule tracteur (VT), équipé d'au moins une essieu tracteur (T) tel :

- on échantillonne la trajectoire (C) du véhicule tracteur (VT) en fonction de la distance parcourue par l'attelage, constitué dudit véhicule tracteur (VT) et de la remorque (RQ), pour déterminer le déplacement du véhicule tracteur (VT),
- on enregistre successivement des paramètres relatifs à la position (Cj) de l'essieu tracteur (T) sur la trajectoire (C), et plus particulièrement, à chaque fois que l'essieu tracteur a parcouru une distance prédéterminée (d), l'angle de braquage avant (f) du véhicule tracteur ainsi que l'angle de braquage arrière (r) de l'essieu remorqué (R),
- on calcule, pas à pas, par itération, l'angle de braquage ($\alpha_i$) à appliquer à l'essieu directeur remorqué (R) pour qu'il se déplace sur la trajectoire en tenant compte d'un nombre prédéterminé de N positions (Cj) enregistrées précédemment,
- on applique au moins partiellement ledit angle de braquage ($\alpha_i$) calculé pour ledit essieu remorqué (R),

et dans lequel pour chaque i$^{ème}$ itération au cours de laquelle l'essieu directeur remorqué (R) se trouve à la position $R_0$(i) et se déplace vers la position $R_1$(i) :

a) on mesure l'angle de braquage avant ($f_0$) et l'angle de braquage arrière ($r_0$) au point $R_0$(i),
b) on mesure l'angle de braquage avant ($f_1$) et l'angle de braquage arrière ($r_1$) au point $R_1$(i),
c) on calcule un angle élémentaire de correction ($e_i$) à appliquer à l'essieu directeur remorqué (R) lorsqu'il se trouvera à la position $R_0$(i+N) théoriquement nouvellement occupé par l'essieu tracté (T),

tel que ledit angle de braquage ($\alpha_i$) appliqué à l'essieu directeur remorqué (R) en la position $R_0$(i+N) résulte de la somme des N angles élémentaires ($e_k$) de correction de trajectoire, associés aux N points ($C_j$) de la trajectoire situé entre l'essieu tracteur (T) et l'essieu directeur remorqué (R), à savoir : $\alpha_i = \sum_{k=i}^{i+N-1} e_k$ .

L'invention concerne également un dispositif de guidage d'une remorque (RQ) équipée d'au moins un essieu directeur (R), le long de la trajectoire (C) décrite par un véhicule tracteur (VT) équipé d'au moins un essieu tracteur (T), comprenant :

- des moyens d'échantillonnage de la trajectoire (C) du véhicule tracteur (VT) en fonction de la distance parcourue par ledit attelage, pour déterminer le déplacement du véhicule tracteur (VT), se présentent sous la forme d'un capteur de déplacement (5) ;
- des moyens de mesure et des moyens d'enregistrement des paramètres relatifs à la position ($C_j$) de l'essieu tracteur (T) sur la trajectoire (C), en fonction dudit déplacement, se présentent sous la forme deux capteurs de position angulaire (6, 7) mesurant respectivement, d'une part, l'angle formé entre l'essieu directeur remorqué (R) et l'essieu tracteur (T), à savoir l'angle de braquage avant (f), et d'autre part, l'angle de braquage arrière (r) des roues de l'essieu directeur remorqué :
- des moyens de calcul de l'angle de braquage ($\alpha_i$), selon l'invention, à appliquer à l'essieu directeur remorqué (R) pour qu'il se déplace sur la trajectoire (C) ;
- des moyens de commande pour appliquer au moins partiellement ledit angle de braquage ($\alpha_i$) calculé audit essieu directeur remorqué (R)

ledit dispositif ne nécessitant que trois capteurs, à savoir les deux capteurs angulaires (6, 7) d'une part, et le capteur de déplacement (5), d'autre part, pour assurer le guidage de l'essieu directeur sur la trajectoire du véhicule tracteur.
L'invention sera mieux comprise à la lecture de la description, accompagnée des dessins en annexe, parmi lesquels :

- la figure 1 est un diagramme représentant les moyens de l'invention selon une première variante ainsi que leurs relations,
- la figure 2 est une vue schématique de dessus d'un attelage équipé d'un dispositif conforme à l'invention,
- la figure 3 est une illustration schématique d'une boucle de fonctionnement d'un procédé conforme à l'invention,
- la figure 4 est une illustration schématique du déplacement d'un attelage selon l'invention le long de sa trajectoire, pour une bonne compréhension des notations utilisées dans la description.

L'invention concerne tout d'abord un procédé de guidage d'une remorque RQ équipée d'au moins un essieu directeur R le long de la trajectoire C décrite par un véhicule tracteur VT équipé d'au moins un essieu tracteur T.

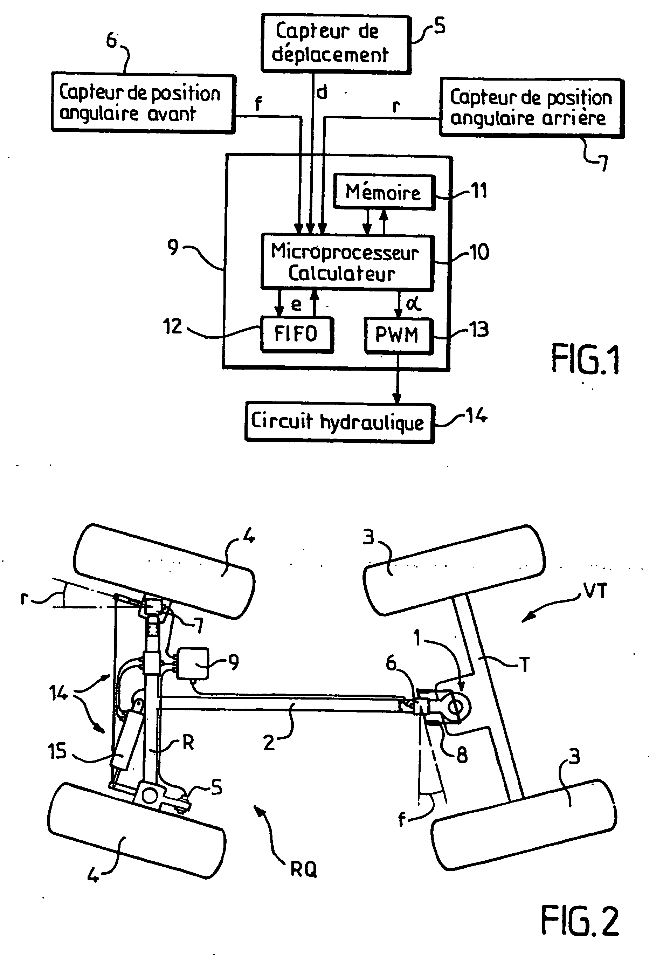

Afin de simplifier la figure 2, on n'y a fait apparaître que l'essieu arrière du véhicule tracteur VT, auquel la remorque RQ est attelée. Cet essieu est considéré comme l'essieu tracteur T qu'il soit lui-même un essieu moteur ou non du véhicule tracteur. Ce qui importe, c'est le fait que la remorque RQ soit attelée audit essieu au niveau du point d'attelage 1. Ainsi, il faut bien réaliser que le véhicule tracteur peut comprendre un autre essieu avant, lui-même directeur. L'essieu tracteur T est fixe par exemple, c'est-à-dire que ses roues ne sont pas directrices.

Néanmoins, l'invention a également vocation à s'appliquer à un véhicule automoteur dont les essieux avant et arrière seraient tous deux directeurs.

La remorque RQ comprend quant à elle un essieu directeur remorqué R et une barre de traction 2 assujettie à l'essieu tracteur T au niveau du point d'attelage 1. Dans les applications considérées, la barre de traction 2 a une longueur L variant de 3 à 8 m et par exemple de 3 à 5 m. Cette longueur est très supérieure à la distance entre le point d'attelage 1 de la remorque RQ et le milieu de l'essieu tracteur T, celle-ci étant généralement comprise entre 30 et 80 cm, et par exemple entre 30 et 50 cm. Aussi, dans une première approximation, on considère que la distance séparant l'essieu tracteur T de l'essieu directeur remorqué R est sensiblement égale à la longueur L de la barre de traction 2.

Sur la figure 2, on a représenté les essieux tracteurs T et directeur remorqué R équipés de roues fixes 3 ou directrices 4 respectivement. On pourrait néanmoins imaginer un véhicule pour se déplacer sur la neige et équipé de patins. Un procédé et un dispositif conformes à l'invention ont tout à fait vocation à être utilisés dans ce cadre puisqu'en permettant à la remorque de suivre trace dans trace la trajectoire du véhicule tracteur, cela diminuerait la consommation d'énergie de l'ensemble.

Le problème qui se pose est le suivant : comment faire en sorte qu'un essieu directeur remorqué R passe par les mêmes points que l'essieu tracteur T. En effet, lorsque le véhicule tracteur VT change de direction, plusieurs phénomènes physiques entrent en oeuvre au niveau de la remorque RQ. La force de traction exercée par le véhicule tracteur VT au niveau de l'essieu directeur remorqué R se décompose en une composante longitudinale parallèle au plan de rotation des roues 4 dans notre exemple et une composante latérale perpendiculaire audit plan de rotation des roues 4.

Un premier phénomène est dû à la composante latérale de ladite force de traction. Ce phénomène a tendance à faire quitter la remorque RQ de la trajectoire C suivie par le véhicule tracteur VT.

Des seconds phénomènes ont tendance à maintenir la remorque RQ dans sa trajectoire. Il s'agit des frottements longitudinaux, négligeables par rapport aux frottements latéraux, de l'effet gyroscopique des roues 4 en rotation de la remorque RQ et de l'inertie de la remorque RQ.

Le problème est donc de corriger la trajectoire de l'essieu directeur remorqué R de la remorque pour qu'à tout instant, quelles que soient la trajectoire et la vitesse de l'attelage, constitué du véhicule tracteur VT et de la remorque RQ, le premier phénomène reste négligeable par rapport aux seconds phénomènes.

Le procédé proposé consiste donc à calculer de manière itérative un angle de braquage $\alpha_i$ à appliquer à l'essieu directeur remorqué R pour qu'il se déplace sur la trajectoire C du véhicule tracteur VT.

Le procédé conforme à l'invention comprend donc une étape d'échantillonnage de la trajectoire C du véhicule tracteur VT, destiné à connaître des points rapprochés, en comparaison de la longueur de l'attelage, de la trajectoire C suivie par le véhicule tracteur. Plus la fréquence d'échantillonnage est importante, plus la précision du procédé sera grande. En effet, cela permettra de calculer et d'appliquer un angle de braquage $\alpha_i$ qui pourra évoluer de façon quasi continue suivant les modifications de la direction empruntée par le véhicule tracteur VT.

Le procédé comprend également une étape d'enregistrement des paramètres relatifs aux positions $C_i$ de l'essieu tracteur T échantillonnées sur la trajectoire C, par rapport à l'essieu directeur remorqué R. En effet, il est nécessaire de conserver ces informations tant que l'essieu directeur remorqué R n'a pas atteint l'une de ces positions échantillonnées $C_i$ de l'essieu tracteur T.

A titre de remarque, il est avantageux de procéder à l'échantillonnage en fonction de la distance parcourue par l'attelage, en s'affranchissant de la vitesse de déplacement de l'ensemble. Cela permet d'améliorer la précision du procédé lorsque par exemple le véhicule tracteur VT accélère, ralentit ou même s'arrête.

Ainsi, on pourra échantillonner ladite trajectoire C et enregistrer lesdits paramètres à chaque fois que l'attelage aura parcouru une distance prédéterminée d. Plus cette distance d sera faible, plus la fréquence d'échantillonnage sera importante et la précision du guidage bonne.

Enfin, la dernière étape du procédé consiste à appliquer au moins partiellement ledit angle de braquage $\alpha_i$ calculé, à l'essieu directeur remorqué R. On précise que l'angle de braquage $\alpha_i$ calculé est appliqué éventuellement partiellement car il est possible que cet angle $\alpha_i$ excède les limites de braquage de l'essieu directeur remorqué R. Dans ce cas, comme nous le verrons plus loin, un nouvel angle de braquage $\alpha_i$ pourra être calculé au cours d'une itération ultérieure du procédé, de sorte à ramener progressivement la remorque RQ dans la trajectoire du véhicule tracteur VT.

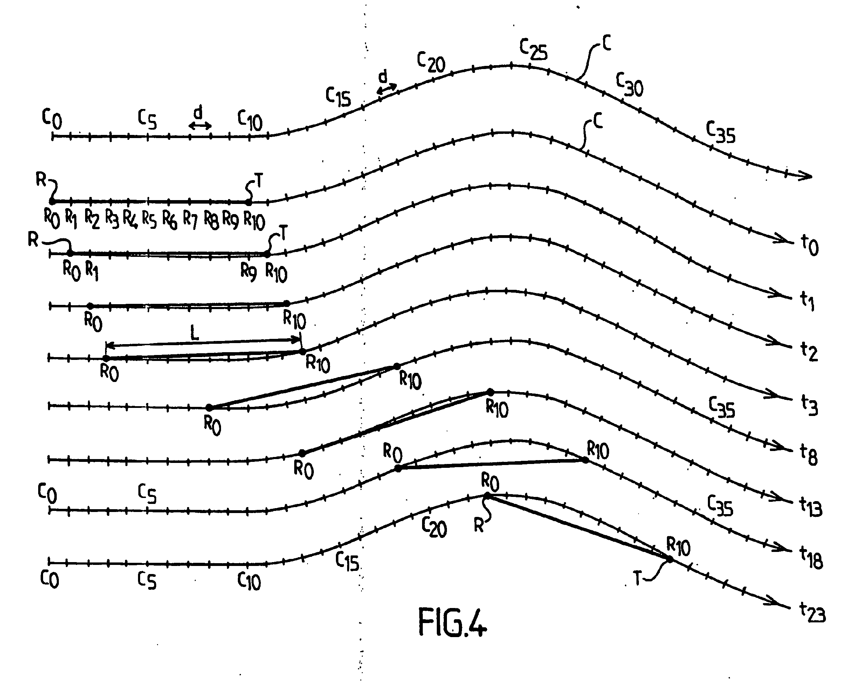

Nous allons maintenant décrire, en référence à la figure 4, les notations utilisées pour expliquer le déroulement du procédé conforme à l'invention.

On voit en haut de la figure 4 une trajectoire C sur laquelle sont matérialisés des points $C_0$, $C_1$, ..., deux points

consécutifs étant écartés d'une distance sur la courbe d égale à la distance d'échantillonnage prédéterminée.

A l'instant t = 0 , correspondant à une étape d'initialisation du procédé, l'essieu directeur remorqué R est situé au point $C_0$ et l'essieu tracté T au point $C_{10}$. Il s'agit d'un cas particulier correspondant à la situation dans laquelle la longueur L de la barre de traction 2 est sensiblement égale à 10 fois la distance d.

Les points de la courbe C situés entre l'essieu directeur remorqué R et l'essieu tracteur T sont numérotés $R_0$ à $R_{10}$.

On constate que cette numérotation est maintenue à toutes les étapes du procédé. Aussi, une notation exacte serait $R_0(i)$, $R_1(i)$, ... , $R_{10}(i)$. En l'absence de toute ambiguïté, nous utiliserons la notation simplifiée $R_0$, $R_1$, ..., $T_{10}$.

Ainsi, théoriquement, les points $C_i$, $T_0(i)$ et $R_1(i-1)$ sont confondus, comme le montrent les premières étapes du procédé illustrées par les courbes de la figure 4. Les courbes $(t_0, t_1, ..., t_{23})$ correspondent à des itérations successives du procédé conforme à l'invention. Les différentes positions occupées par l'essieu tracteur T sur la trajectoire C sont donc désignées soit dans un repère lié à la trajectoire et indépendant du temps, les points étant alors appelés $C_1$, soit dans un repère mobile lié à l'essieu directeur remorqué R, dépendant du temps, les points étant alors appelés $R_0$, $R_1$, etc.

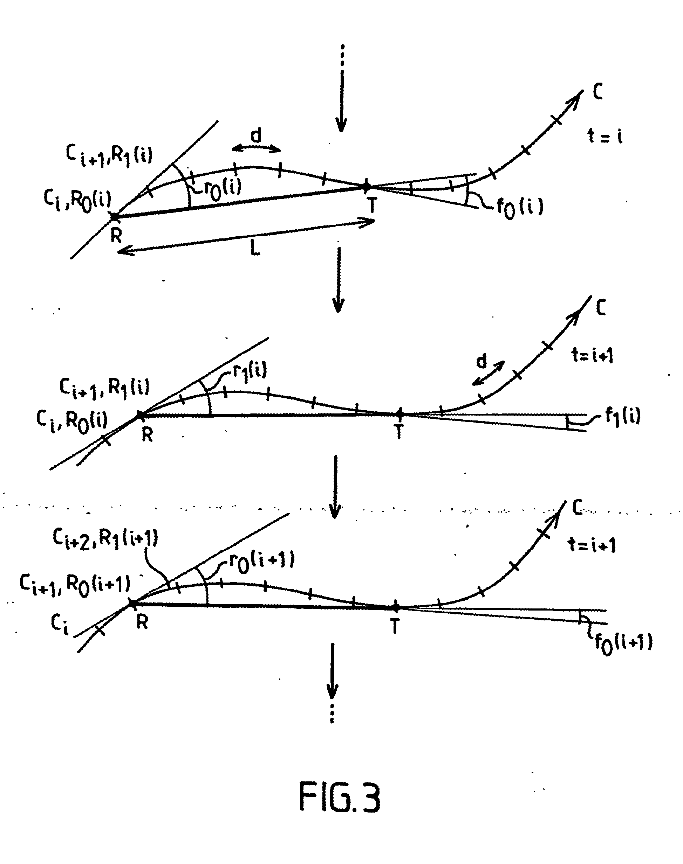

En référence à la figure 3, les étapes du procédé conforme à l'invention sont les suivantes :

a) Au cours de la $i^{ème}$ itération du procédé, l'essieu directeur remorqué R se trouve au point $R_0(i)$ ou $C_i$ et il se déplace vers le point $R_1(i)$ (ou $C_{i+1}$), dont la position a été enregistrée au cours d'une itération précédente du procédé, lorsque l'essieu tracteur T s'y trouvait.

On mesure :

- l'angle de braquage avant $f_0$ formé entre l'essieu tracteur T et l'essieu directeur remorqué R, au point T ;
- l'angle de braquage arrière $r_0$ formé entre le plan de rotation des roues directrices 4 et la barre de traction 2, au point $R_0$.

On suppose que l'essieu tracteur poursuit sa route dans la même direction et lorsque ledit essieu tracteur T a parcouru la distance d'échantillonnage d, l'essieu directeur remorqué R se trouve théoriquement au point $R_1(i)$ ou $C_{i+1}$ de la trajectoire C.

On mesure alors les angles de braquage avant $f_1(i)$ et arrière $r_1(i)$.

b) On peut alors calculer avec exactitude la nouvelle position de l'essieu tracteur T, ce qui permet de vérifier si l'hypothèse faite à l'étape précédente était juste ou non.

Dans tous les cas, on peut calculer un angle élémentaire $e_i$ de correction de trajectoire qu'il faudra appliquer à l'essieu directeur remorqué R lorsqu'il se trouvera à la position nouvellement occupée par l'essieu tracteur T. Ce calcul permet donc de corriger la trajectoire lorsque l'hypothèse de l'étape précédente était erronée, c'est-à-dire lorsque le véhicule tracteur a changé de direction, ou lorsque l'angle $\alpha_i$ appliqué à l'essieu directeur remorqué a été limité par les limites de braquage dudit essieu R.

Pour calculer l'angle élémentaire $e_i$ de correction de trajectoire, on calcule tout d'abord un angle de braquage moyen selon la formule:

$$r_m = \frac{(r_1 + r_0) + (f_1 - f_0)}{2}$$

On calcule l'angle élémentaire $e_i$ de correction de trajectoire selon la formule :

$$e_i = Arc\tan \frac{\cos r_m + \tan f_1}{K + \cos r_m}$$

où K est un paramètre de longueur du châssis, qui dépend principalement de la longueur L de la barre de traction 2. Ce paramètre K permet également de tenir compte de la distance entre le point d'attelage 1 et le milieu de l'essieu tracteur T, ainsi que de divers phénomènes mécaniques de frottement.

Le paramètre K est ajusté par l'utilisateur et il est compris par exemple entre 1 et 50, plus particulièrement entre 1 et 20. Il permet d'ajuster la précédente formule à un couple véhicule tracteur-remorque particulier.

On dispose donc d'une série d'angles élémentaires $e_i$ de correction de trajectoire. L'angle de braquage $\alpha_i$ à appliquer à l'essieu directeurremorqué R est la somme de N angles élémentaires $e_i$ de correction de trajectoire, associée au N points $C_i$ de la trajectoire C situés entre l'essieu tracteur T et l'essieu directeur remorqué R.

$$\alpha_i = \sum_N e_i$$

c) Après avoir calculé et enregistré la nouvelle position de l'essieu tracteur T sur la trajectoire C, on supprime les informations correspondant au point $R_0(i)$ , qui est devenu obsolète et on le remplace par celle correspondant au point $R_1(i)$.

On peut alors réaliser une nouvelle itération du procédé à partir de l'étape a).

Ainsi, les paramètres relatifs à la position $C_i$ de l'essieu tracteur T sur la trajectoire C par rapport à l'essieu directeur remorqué R sont soit mesurés (angle de braquage avant $f_i$ du véhicule tracteur et angle de braquage arrière $r_i$ de l'essieu directeur remorqué) soient calculés (angle élémentaire $e_i$ de correction de trajectoire).

Avantageusement, on enregistre lesdits angles élémentaires $e_i$ de correction de trajectoire dans un registre à décalage de type FIFO (first in, first out) pour constituer ainsi une pile desdits angles élémentaires $e_i$ de correction de trajectoire, qu'il suffit de sommer pour obtenir ledit angle de braquage $\alpha_i$ à appliquer à l'essieu directeur remorqué R pour qu'il se déplace sur la trajectoire C. On tient ainsi compte d'un nombre prédéterminé N de positions $C_i$ enregistrées précédemment, situées entre l'essieu tracteur T et l'essieu directeur remorqué R, puisque seules les paramètres relatifs aux points par lesquels ledit essieu directeur remorqué R n'est pas encore passé sont conservées dans ledit registre à décalage.

Or, on rappelle que ces paramètres correspondent à des positions réellement occupées par l'essieu tracteur T. Ainsi, lorsque l'angle de braquage réellement appliqué à l'essieu directeur remorqué R n'était pas adéquat, le procédé utilisé permet de corriger ces erreurs.

Enfin, il est avantageux de calculer par interpolation, entre deux positions enregistrées successives $C_i$, $C_{i+1}$, une position intercalaire pour améliorer la précision du guidage. On pourra utiliser par exemple une méthode d'interpolation linéaire connu de l'homme du métier.

Cela permet notamment de diminuer, par le calcul, la distance d'échantillonnage d et donc de rendre encore plus fluide les changements d'angle de braquage $\alpha_i$ appliqués à l'essieu directeur remorqué R.

L'invention concerne également un dispositif de guidage d'une remorque RQ équipée d'au moins un essieu directeur remorqué R, le long de la trajectoire C décrite par un véhicule tracteur VT équipé d'au moins un essieu tracteur T.

Selon l'invention, le dispositif comprend des moyens d'échantillonnage de la trajectoire C du véhicule tracteur en fonction de la distance parcourue par l'attelage, pour déterminer le déplacement du véhicule tracteur.

Il s'agit en particulier d'un capteur de déplacement 5 qui permet de mesurer la distance parcourue par l'essieu directeur remorqué R. Avantageusement, il s'agit d'un capteur assujetti à l'essieu directeur remorqué R et coopérant avec des plots magnétiques disposés à intervalles réguliers sur le pourtour d'une roue directrice 4 de l'essieu directeur R.

Bien sûr, un autre système permettant de mesurer une distance parcourue est envisageable. Il s'agira par exemple d'un accéléromètre ou d'un système radar.

Le dispositif comprend également des moyens de mesure et des moyens d'enregistrement de paramètres relatifs à la position $C_i$ de l'essieu tracteur T sur la trajectoire C par rapport à l'essieu directeur remorqué R, en fonction du déplacement.

Dans la variante du procédé décrite ci-dessus, les capteurs utilisés sont des capteurs de position angulaire 6, 7, aptes à mesurer l'angle de braquage avant $f_i$ et arrière $r_i$.

Selon une autre variante, on pourrait mettre en oeuvre des gyroscopes, pour déterminer lesdites positions angulaires.

Un capteur 6 de position angulaire avant est placé sur la barre de traction 2 de la remorque et mesure l'angle de braquage avant $f_i$ formé entre l'essieu tracteur fixe T et l'essieu directeur remorqué R, via un système de tringlerie amovible.

Un second capteur 7 de position angulaire est placé à l'arrière du châssis de la remorque RQ, sur la partie fixe de l'essieu directeur remorqué R et mesure l'angle de braquage arrière r formé entre la barre de traction 2 et le plan de rotation des roues directrices 4 de la remorque RQ.

En outre, le dispositif comprend des moyens de calcul de l'angle de braquage $\alpha_i$ à appliquer à l'essieu directeur remorqué R pour qu'il se déplace sur la trajectoire C. Il s'agit par exemple d'un calculateur électronique 9 qui reçoit les informations des différents capteurs 5, 6 et 7.

Le dispositif comprend enfin des moyens de commande aptes à appliquer au moins partiellement ledit angle de braquage $\alpha_i$ calculé à l'essieu directeur remorqué R.

Comme illustré à la figure 1, le calculateur 9 comprend au moins un micro-processeur 10, une mémoire 11 et un registre à décalage 12.

Le micro-processeur 10 est programmé pour réaliser les opérations de calcul desdits angles élémentaires $e_i$ de correction de trajectoire et de l'angle de braquage $\alpha_i$, à appliquer à l'essieu directeur remorqué R. Il coopère avec ladite mémoire 11 et ledit registre à décalage 12 en échangeant les informations nécessaires aux calculs effectués.

Le micro-processeur 10 coopère également avec un circuit hydraulique 14 par l'intermédiaire d'un dispositif 13 de contrôle de la nervosité de l'hydraulique, pour appliquer ledit angle de braquage $\alpha_i$ au moins partiellement.

Ledit calculateur 9 est par exemple équipé de composants MOS-FET pour le pilotage de l'hydraulique.

L'angle de braquage $\alpha_i$ est appliqué audit essieu directeur remorqué R par un vérin hydraulique 15 coopérant avec les roues directrices 4 pour le braquer, dans les limites de braquage autorisés.

Le calculateur 9 peut également comprendre des éléments accessoires :

- une entrée de sécurité, destinée à inhiber le système, par exemple pour les trajets sur route,
- des entrées de sélection du mode de fonctionnement, par exemple manuel ou automatique,
- un connecteur pour le paramétrage du dispositif à l'aide d'un ordinateur.

Le dispositif et le procédé conformes à l'invention permettent donc de restituer l'angle de braquage avant $f_i$ mesuré au niveau de l'essieu tracteur T, lorsque l'essieu directeur remorqué R a atteint le point correspondant, en tenant compte du fait que l'angle de braquage avant $f_i$ peut avoir varié entre-temps. L'angle de braquage $\alpha_i$ à appliquer à l'essieu directeur remorqué R n'est donc pas appliqué directement mais calculé en fonction d'un nombre prédéterminé N de positions $C_i$ enregistrées précédemment.

De plus, le capteur de déplacement permet au système d'être indépendant de la vitesse. Même après un arrêt dans un virage, suivi d'un redémarrage, le guidage de la remorque RQ le long de la trajectoire C du véhicule tracteur VT, reste possible.

L'invention concerne également un véhicule équipé d'un dispositif tel que décrit précédemment, apte à mettre en oeuvre le procédé conforme à l'invention.

Il s'agira par exemple d'un véhicule de travaux agricoles. L'essieu tracteur T pourra être l'essieu arrière d'un tracteur agricole, auquel une remorque est attelée. En ce qui concerne la remorque, il pourra s'agir par exemple d'un pulvérisateur de produits phyto-sanitaires ou d'autres produits de traitement, ou encore d'un épandeur à fumier.

Naturellement, d'autres modes de mise en oeuvre, à la portée de l'homme de l'art, auraient pu encore être envisagés sans pour autant sortir du cadre de l'invention, telle que définie par les revendications.

Par exemple, on peut concevoir un attelage dans lequel la remorque n'est pas équipée d'un essieu directeur à roues directrices mais d'un essieu à roues fixes. Pour guider la remorque le long de la trajectoire du véhicule tracteur, la barre de traction est équipée d'une articulation située à une distance variable, de 30 cm à 3 m, du point d'attelage. Cette articulation permet d'appliquer un angle de braquage à la remorque au niveau du point d'attelage. Dans ce cas, on a donc un timon articulé et non un essieu directeur classique, et la remorque demeure directrice.

## Revendications

1. Procédé de guidage d'une remorque (RQ) équipée d'au moins un essieu remorqué (R) directeur, le long de la trajectoire (C) décrite par un véhicule tracteur (VT), équipé d'au moins un essieu tracteur (T) tel que :

   - on échantillonne la trajectoire (C) du véhicule tracteur (VT) en fonction de la distance parcourue par l'attelage, constitué dudit véhicule tracteur (VT) et de la remorque (RQ), pour déterminer le déplacement du véhicule tracteur (VT),
   - on enregistre successivement des paramètres relatifs à la position (Cj) de l'essieu tracteur (T) sur la trajectoire (C), et plus particulièrement, à chaque fois que l'essieu tracteur a parcouru une distance prédéterminée (d), l'angle de braquage avant (f) du véhicule tracteur ainsi que l'angle de braquage arrière (r) de l'essieu remorqué (R),
   - on calcule, pas à pas, par itération, l'angle de braquage ($\alpha_i$) à appliquer à l'essieu directeur remorqué (R) pour qu'il se déplace sur la trajectoire en tenant compte d'un nombre prédéterminé de N positions (Cj) enregistrées précédemment,
   - on applique au moins partiellement ledit angle de braquage ($\alpha_i$) calculé pour ledit essieu remorqué (R),

   et dans lequel pour chaque $i^{\text{ème}}$ itération au cours de laquelle l'essieu directeur remorqué (R) se trouve à la position $R_0(i)$ et se déplace vers la position $R_1(i)$ :

   a) on mesure l'angle de braquage avant ($f_0$) et l'angle de braquage arrière ($r_0$) au point $R_0(i)$,
   b) on mesure l'angle de braquage avant ($f_1$) et l'angle de braquage arrière ($r_1$) au point $R_1(i)$,
   c) on calcule un angle élémentaire de correction ($e_i$) à appliquer à l'essieu directeur remorqué (R) lorsqu'il se trouvera à la position $R_0(i+N)$ théoriquement nouvellement occupé par l'essieu tracté (T),

tel que ledit angle de braquage ($\alpha_i$) appliqué à l'essieu directeur remorqué (R) en la position $R_0(i+N)$ résulte de la somme des N angles élémentaires ($e_k$) de correction de trajectoire, associés aux N points ($C_j$) de la trajectoire situé entre l'essieu tracteur (T) et l'essieu directeur remorqué (R) à savoir : $\alpha_i = \sum_{k=i}^{i+N-1} e_k$ .

2. Procédé selon la revendication 1, dans lequel l'angle élémentaire de correction ($e_i$) pour K = i est calculé selon les formules suivantes :

$$e_i = Arc\tan\frac{\cos r_m + \tan f_1}{K + \cos r_m} \quad \text{et avec } r_m = \frac{(r_1 + r_0) + (f_1 - f_0)}{2}$$

3. Procédé selon la revendication 1 ou 2, dans lequel on enregistre l'angle élémentaire de correction ($e_i$) dans un registre à décalage (12).

4. Procédé selon l'une des revendications 1 à 3, dans lequel on calcule par interpolation, entre deux positions enregistrées successives ($C_j$, $C_{j+1}$) une position intercalaire pour améliorer la précision du guidage.

5. Dispositif de guidage d'une remorque (RQ) équipée d'au moins un essieu directeur (R), le long de la trajectoire (C) décrite par un véhiculé tracteur (VT) équipé d'au moins un essieu tracteur (T), comprenant :

   - des moyens d'échantillonnage de la trajectoire (C) du véhicule tracteur (VT) en fonction de la distance parcourue par ledit attelage, pour déterminer le déplacement du véhicule tracteur (VT), se présentant sous la forme d'un capteur de déplacement (5) ;
   - des moyens de mesure et des moyens d'enregistrement des paramètres relatifs à la position ($C_j$) de l'essieu tracteur (T) sur la trajectoire (C), en fonction dudit déplacement, se présentant sous la forme deux capteurs de position angulaire (6, 7) mesurant respectivement, d'une part, l'angle formé entre l'essieu directeur remorqué (R) et l'essieu tracteur (T), savoir l'angle de braquage avant (f), et d'autre part, l'angle de braquage arrière (r) des roues de l'essieu directeur remorqué,

   **caractérisé en ce qu'**il présente :

   - des moyens de calcul de l'angle de braquage ($\alpha_i$), pour la mise en oeuvre du procédé selon l'une des revendications 1 à 4, à appliquer à l'essieu directeur remorqué (R) pour qu'il se déplace sur la trajectoire (C) ;
   - des moyens de commande pour appliquer au moins partiellement ledit angle de braquage ($\alpha_i$) calculé audit essieu directeur remorqué (R)

   ledit dispositif ne nécessitant que trois capteurs, à savoir les deux capteurs angulaires (6, 7) d'une part, et le capteur de déplacement (5), d'autre part, pour assurer le guidage de l'essieu directeur sur la trajectoire du véhicule tracteur.

6. Dispositif selon la revendication 5, comprenant un calculateur (9) intégrant des moyens d'enregistrement se présentant sous la forme d'une mémoire (11) et/ou d'un registre à décalage (12), des moyens de calcul se présentant sous la forme d'un microprocesseur (10), et des moyens de commande (13) d'un circuit hydraulique (14) destinés à appliquer au moins partiellement ledit angle de braquage ($\alpha_i$) calculé audit essieu directeur remorqué (R).

## Claims

1. A method of guiding a trailer (RQ) fitted with at least one towed drive axle (R), along the trajectory (C) described by a tractor vehicle (VT), fitted with at least one tractor axle(T) such as:

   - the trajectory (C) of the tractor vehicle (VT) is sampled according to the distance travelled by the coupling, formed of said tractor vehicle (VT) and of the trailer (RQ), so as to determine the displacement of the tractor vehicle (VT),
   - parameters relative to the position ($C_j$) of the tractor axle (T) are recorded successively on the trajectory (C), and more particularly every time the tractor axle has travelled a predetermined distance (d), the front turning angle (fi) of the tractor vehicle as well as the rear turning angle ($r_i$) of the towed axle (R),
- the turning angle ($\alpha_i$) to be applied to the towed drive axle (R) is calculated step by step by iteration, for it to move over the trajectory by taking in account a predetermined number of N positions ($C_j$) which have been recorded previously,
- said turning angle ($\alpha_i$) calculated for said towed axle (R) is applied at least partially,

and wherein for each i-th iteration during which to the towed drive axle (R) can be found in position $R_0(i)$ and moves towards position $R_1(i)$;

a) the front turning angle (f0) and the rear turning angle ($r_0$) are measured at point $R_0(i)$,
b) the front turning angle ($f_1$) and the rear turning angle ($r_1$) are measured at point $R_1(i)$,
c) an elementary correction angle ($e_i$) is calculated, to be applied to the towed drive axle (R) when in position $R_0(i+N)$ theoretically newly occupied by the towed axle (T),

such as said turning angle ($\alpha_i$) is applied to the towed drive axle (R) in position $R_0(i+N)$ of the sum of the N elementary angles ($e_i$) for correcting the trajectory, associated with the N points ($C_j$) of the trajectory situated between the tractor axle (T) and to the towed drive axle (R), namely: $\alpha_i = \sum_{k=i}^{i+N-1} e_k$

2. A method according to claim 1, wherein the elementary correction angle ($e_i$) is calculated according to the following formulae:

$$e_i = Arc\tan\frac{\cos r_m + \tan f_1}{K + \cos r_m} \text{ and with } r_m = \frac{(r_1 + r_0) + (f_1 - f_0)}{2}.$$

3. A method according to claim 1 or 2, wherein the elementary correction angle ($e_i$) is recorded in a shift register (12).

4. A method according to one of the claims 1 to 3, wherein an intermediate position for improved guiding accuracy is calculated by interpolation, between two successive recorded positions ($C_j$, $C_{j+1}$).

5. A device for guiding a trailer (RQ) fitted with at least one towed drive axle (R), along the trajectory (C) described by a tractor vehicle (VT), fitted with at least one tractor axle (T) including:

- means for sampling the trajectory (C) of the tractor vehicle (VT) in relation to the distance travelled by said coupling, so as to determine the displacement of the tractor vehicle (VT), in the form of a displacement sensor (5);
- means for measuring and means for recording parameters relative to position ($C_j$) of the tractor axle (T) on the trajectory (C), in relation to said displacement, which are in the form of two angular position sensors (6, 7) for measuring respectively, on the one hand, the angle formed between the front turning angle (R) and the tractor axle (T), namely the front turning angle (f), and on the other hand, the rear turning angle (r) of the wheels of the towed drive axle, **characterised by** providing:
- means for calculating the turning angle ($\alpha_i$), for implementing the method according to one of claims 1 to 4, to be applied to the towed drive axle (R) for it to move over the trajectory (C) ;
- control means for applying at least partially said calculated turning angle ($\alpha_i$) to said towed drive axle (R)

wherein said device only requires three sensors, namely both angular sensors (6, 7) on the one hand and the displacement sensor (5), on the other, for guiding the drive axle on the trajectory of the tractor vehicle.

6. A device according to claim 5, comprising a calculator (9) incorporating recording means in the form of a memory (11) and/or a shift register (12), computational means in the form of a microprocessor (10), and control means (13) of a hydraulic system (14) intended for applying at least partially said calculated turning angle ($\alpha_i$) to said towed drive axle (R).

**Patentansprüche**

1. Verfahren zur Lenkung eines mit wenigstens einer geschleppten führenden Radachse (R) ausgestatteten Anhängers (RQ) entlang der von einem mit wenigstens einer Zugachse (T) ausgestatteten Zugwagen (VT) beschriebenen Bahn (C), so dass :

   - die Bahn (C) des Zugwagens (VT) in Abhängigkeit von dem durch die aus dem besagten Zugwagen (VT) und dem Anhänger (RQ) bestehenden Anhängevorrichtung abgelegten Abstand abgetastet wird, um die Bewegung des Zugwagens (VT) zu bestimmen,
   - Parameter bezüglich der Position (Cj) der Zugachse (T) auf der Bahn (C), insbesondere jeweils dann, wenn die Zugachse einen vorbestimmten Abstand (d) abgelegt hat, der vordere Einschlagwinkel (f) des Zugwagens sowie der hintere Einschlagwinkel (r) der geschleppten Radachse (R) gespeichert werden,
   - der Einschlagwinkel ($\alpha_i$), der auf die geschleppte führende Radachse (R) anzuwenden ist, damit diese sich auf der Bahn bewegt, stufenweise durch Iteration unter Berücksichtigung einer vorgegebenen Anzahl von N zuvor gespeicherten Positionen (Cj) berechnet wird,
   - der besagte, für die besagte geschleppte Radachse (R) berechnete Einschlagwinkel ($\alpha_i$) wenigstens teilweise angewendet wird,

   und bei dem für jede i-te Iteration, während der sich die geschleppte führende Radachse (R) an der Position $R_0(i)$ befindet und sich zur Position $R_1(i)$ bewegt:

   a) der vordere Einschlagwinkel ($f_0$) und der hintere Einschlagwinkel ($r_0$) an Punkt $R_0(i)$ gemessen werden,
   b) der vordere Einschlagwinkel ($f_1$) und der hintere Einschlagwinkel ($r_1$) an Punkt $R_1(i)$ gemessen werden,
   c) ein Korrektur-Elementarwinkel ($e_i$) berechnet wird, der auf die geschleppte führende Radachse (R) anzuwenden ist, wenn diese sich in der theoretisch neu von der geschleppten Radachse (T) eingenommenen Position $R_0(i+N)$ befinden wird,

   so dass sich der besagte, auf der geschleppten führenden Radachse (R) angewandten Einschlagwinkel ($\alpha_i$) an Position $R_0(i+N)$ aus der Summe der N Bahnkorrektur-Elementarwinkel ($e_k$), der den N Punkten (C|) der sich zwischen der geschleppten Radachse (T) und der geschleppten führenden Radachse (R) befindlichen Bahn zugeordnet sind, nämlich $\alpha_i = \sum_{k=l}^{i+N-l} e_k$ , ergibt.

2. Verfahren nach Anspruch 1, bei dem der Korrektur-Elementarwinkel ($e_i$) gemäß den nachfolgenden Formeln berechnet wird:

$$e_i = Arctan \frac{cos r_m + tan f_1}{K + cos r_m} \quad \text{und mit} \quad r_m = \frac{(r_1 + r_0) + (f_1 - f_0)}{2}$$

3. Verfahren nach Anspruch 1 oder 2, bei dem der Korrektur-Elementarwinkel ($e_i$) in einem Schieberegister (12) gespeichert wird.

4. Verfahren nach einem der Ansprüche 1 bis 3, bei dem durch Interpolation zwischen zwei aufeinanderfolgend gespeicherten Positionen ($C_j$, $C_j+1$) eine Zwischenposition berechnet wird, um die Genauigkeit der Lenkung zu verbessern.

5. Vorrichtung zur Lenkung eines mit wenigstens einer führenden Radachse (R) ausgestatteten Anhängers (RQ) entlang der von einem mit wenigstens einer Zugachse (T) ausgestatteten Zugwagen (VT) beschriebenen Bahn (C), umfassend:

   - Mittel zum Abtasten der Bahn (C) des Zugwagens (VT) in Abhängigkeit von dem durch die aus dem besagten Zugwagen (VT) und dem Anhänger (RQ) bestehenden Anhängevorrichtung abgelegten Abstand abgetastet wird, um die Bewegung des Zugwagen (VT) zu bestimmen, die als ein Bewegungsgeber (5) ausgestaltet sind ;

- Mittel zum Messen und Mittel zum Speichern der Parameter bezüglich der Position (Cj) der Zugachse (T) auf der Bahn (C), in Abhängigkeit der besagten Bewegung, die als zwei Winkellagegeber (6, 7) ausgestaltet sind, die jeweils, zum einen, den zwischen der geschleppten führenden Radachse (R) und der Zugachse (T) gebildeten Winkel, nämlich den vorderen Einschlagwinkel (f) und, zum anderen, den hinteren Einschlagwinkel (r) der Räder der geschleppten führenden Radachse messen, **dadurch gekennzeichnet, dass** sie Folgendes aufweist :

- Mittel zum Berechnen des Einschlagwinkel ($\alpha_i$), zur Anwendung des Verfahrens nach einem der Ansprüche 1 bis 4, der auf der geschleppten führenden Radachse (R) anzuwenden ist, damit diese sich auf der Bahn (C) bewegt;

- Steuermittel, um den besagten, berechneten Einschlagwinkel ($\alpha_i$) wenigstens teilweise auf der besagten geschleppten führenden Radachse (R) anzuwenden,

wobei die besagte Vorrichtung nur drei Geber benötigt, nämlich die zwei Winkelgeber (6, 7), einerseits, und den Bewegungsgeber (5), andererseits, um die Lenkung der führenden Radachse auf der Bahn des Zugwagens zu sichern.

6. Vorrichtung nach Anspruch 5, umfassend einen Rechner (9), der als ein Speicher (11) und/oder als ein Schieberegister (12) ausgestaltete Speichermittel, als ein Mikroproczessor (10) ausgestaltete Rechenmittel und Mittel zum Steuern (13) eines Hydraulikkreises (14) integriert, die dazu bestimmt sind, den besagten, berechneten Einschlagwinkel ($\alpha_i$) wenigstens teilsweise auf der besagten geschleppten führenden Radachse (R) anzuwenden.

Capteur de
déplacement ⌐5

6 ⌐

Capteur de position
angulaire avant

f

d

r

Capteur de position
angulaire arrière

⌐7

Mémoire ⌐11

9

Microprocesseur
Calculateur ⌐10

e

α

12 ⌐ FIFO

PWM ⌐13

FIG.1

Circuit hydraulique ⌐14

4

3

VT

r

7

1

6

T

9

14

2

8

15

R

f

5

4

RQ

3

FIG.2

FIG.3

FIG.4

EP 1 449 745 B1

**EP 1 449 745 B1**

## RÉFÉRENCES CITÉES DANS LA DESCRIPTION

**Documents brevets cités dans la description**

- US 2001054524 A
- US 5329451 A
- US 5366059 A